# FASCICULE DE BREVET EUROPEEN

(11) **EP 0 761 710 B1**
(45) Date de publication et mention de la délivrance du brevet: **13.06.2001**
(21) Numéro de dépôt: 96420261.8
(22) Date de dépôt: 01.08.1996
(51) Int. Cl.: C08G 61/12, C25D 5/56

(54) **Structures poreuses prémétallisées par dépôt d'un polymère conducteur et procédé de fabrication**
Mit elektrisch leitfähigen Polymeren vormetallisierte Gegenstände mit poröser Struktur und Verfahren zu deren Herstellung
Products with a porous structure premetallised with electroconductive polymers and process for their preparation

(30) Priorité: 04.08.1995 FR 9509547
(43) Date de publication de la demande: 12.03.1997
(73) Titulaire: S.C.P.S. Société de Conseil et de Prospective Scientifique S.A., 94170 Le Perreux-sur-Marne (FR)
(72) Inventeur: Bugnet, Bernard, 94420 Plessis-Trevise (FR); Costa, Max, 92120 Montrouge (FR); Doniat, Denis, 75116 Paris (FR); Doniat, Jacques, 94300 Vincennes (FR); Rouget, Robert, 75016 Paris (FR)
(74) Mandataire: Moinas, Michel

(56) Documents cités:
- EP-A- 0 234 467
- EP-A- 0 417 750
- PATENT ABSTRACTS OF JAPAN vol. 94, no. 010 & JP 06 298989 A (INOAC CORP), 25 Octobre 1994,

## Description

L'invention concerne, dans sa forme générale, le domaine de la fabrication de structures métalliques ou métallisées poreuses complexes.

L'invention est plus particulièrement relative au domaine de la fabrication de structures métalliques ou métallisées poreuses complexes pour application à titre d'électrodes pour électrolyse d'effluents liquides, de supports d'électrodes pour générateurs électrochimiques, de supports de catalyse, de media filtrants, d'isolants phoniques, de structures de protection électromagnétique et nucléaire, ou autres.

Les structures métalliques ou métallisées selon l'invention sont de types mousse, feutre ou tissu à haut niveau de porosité ouverte, offrant l'aspect d'un réseau dense de fibres ou mailles à ossature tridimensionnelle, définissant une pluralité d'espaces ouverts en communication les uns avec les autres et avec l'extérieur des structures.

Les mousses sont des structures alvéolaires réticulées de grande porosité (supérieure à 80 %, et pouvant atteindre 98 %) et à porosité ouverte par désoperculation, dans lesquelles les mailles du réseau communiquent entre elles en totalité, ou pour le moins dans des proportions importantes.

Les feutres sont des enchevêtrements aléatoires de fibres non tissées, définissant entre elles des espaces inter-fibres de formes et dimensions variables, communiquant entre eux.

Les tissus sont des structures constituées par assemblage de fils ou fibres textiles entrelacés, soit tissés soit maillés. Ils peuvent se présenter sous la forme de structures épaisses et complexes, notamment lorsqu'ils sont constitués de deux faces tissées externes reliées par tricotage de fils qui les maintiennent espacées et interconnectées à la fois, comme permettent par exemple de le réaliser les métiers à tisser de type Raschel.

Ces diverses structures poreuses complexes, que l'on destine selon l'invention à être métallisées dans toute leur épaisseur, sur l'ensemble de leur surface développée, sans colmatage de leur porosité, peuvent être approvisionnées en divers matériaux de base.

Pour les mousses, il s'agit de matières organiques, minérales ou synthétiques, et en particulier de polymères tels que du polyester, du polyamide, du polyuréthanne, ou du polyéther.

Pour les feutres et tissus, il s'agit également de matières organiques, minérales ou synthétiques, telles que les polymères précédemment cités, des fibres de verre, de roche ou de carbone, ou des fibres naturelles telles que coton, laine ou similaire.

Divers procédés de métallisation de telles structures ont déjà été proposés, parmi lesquels :
- dépôt chimique, suivi d'un ou plusieurs dépôts électrochimiques,
- dépôt de particules de carbone ou graphite, suivi d'un ou plusieurs dépôts électrochimiques,
- dépôt métallique sous vide, notamment par pulvérisation cathodique, diffusion gazeuse ou dépôt ionique, suivi d'un ou plusieurs dépôts électrochimiques,
- dépôt chimique en phase vapeur.

Dans tous les cas où l'on entend procéder à un dépôt électrochimique, il convient préalablement de sensibiliser, c'est-à-dire rendre électriquement conductrice, la surface que l'on veut métalliser par voie galvanique. C'est la fonction de l'étape de "prémétallisation" ou "activation conductrice" qui apparaît dans la plupart des procédés cités (dépôt chimique, dépôt de particules de carbone, dépôt sous vide).

La présente invention s'attache tout spécialement à la mise en oeuvre d'un procédé de prémétallisation appliqué à la réalisation de structures métalliques poreuses complexes, procédé apportant divers avantages par rapport aux techniques antérieures pour la réalisation de ces produits.

Le dépôt chimique est, au stade industriel, un procédé coûteux et quelque peu difficile à maîtriser. Il impose la consommation de produits chimiques chers (étain, palladium, ...), et nécessite la mise en oeuvre, entre chacune de ses étapes, d'opérations de rinçage, délicates sur des structures poreuses complexes présentant un fort pouvoir de rétention, afin d'éviter des entraînements indésirables de composés réactifs d'un bain de traitement vers le suivant. Ce procédé, s'il conduit à une prémétallisation généralement très efficace et notamment à haut pouvoir pénétrant dans les structures à traiter, engendre une source additionnelle de coût à travers la nécessité de retraitement de ses effluents liquides.

Le dépôt de particules de carbone ou graphite, largement utilisé à ce jour au stade industriel pour la production de mousses métalliques, est relativement bon marché, aussi bien en termes de produits consommés qu'en matière d'investissements mis en oeuvre. Il présente cependant des inconvénients de trois types :
- les particules de carbone ne forment pas en surface des mailles de la structure un dépôt conducteur continu. La métallisation électrochimique doit donc parvenir à assurer un pontage, à partir de ces particules, entre chacune d'elles. Dans certains cas, la phase initiale de propagation du dépôt galvanique à travers l'ensemble du volume de la structure est lente, devant être effectuée de préférence avec renforcement de la conduction de celle-ci sur des contacts métalliques anodiques, si on veut atteindre des vitesses de recouvrement économiquement acceptables.
- du fait de la taille des particules de carbone, la technique ne permet pas, sans colmatage de la porosité interne, de traiter les structures les plus denses : mousses de porosité supérieure à 100 ppl (100 pores par pouce linéaire), feutres denses, ou tissus épais et denses à fibres fines dont les deux faces tissées externes sont reliées par tricotage de fils qui les maintiennent espacées et interconnectées à la fois ;
- le dépôt de particules de carbone complique l'étape de pyrolyse des matériaux organiques après métallisation, par une augmentation importante de leur masse.

Parmi les dépôts sous vide, seule la pulvérisation cathodique est employée industriellement pour la prémétallisation des structures poreuses complexes selon l'invention. Cette technique, décrite dans l'exposé d'invention FR 2 558 485 du 25 janvier 1984, est, pour l'application concernée, généralement considérée comme la plus performante.

Elle requiert cependant l'emploi de dispositifs industriels sophistiqués, le respect de procédures opératoires précises et délicates, l'investissement en équipements de production étant relativement onéreux. Deux limites s'imposent à l'heure actuelle à ce procédé :
- bien que permettant de réaliser au sein des structures poreuses complexes un dépôt homogène continu, avec un pouvoir de pénétration élevé, le procédé connaît tout de même des limites en termes d'épaisseur du substrat à traiter et de densité de fibres ou mailles (ces deux critères étant à combiner), notamment lorsque le substrat est constitué en un matériau organique qui doit être préservé d'augmentations de température trop importantes ;
- à l'heure actuelle ce procédé permet un fonctionnement par lots (traitement de plaques) ou en semi-continu (traitement de rouleaux) mais pas, à coût économiquement acceptable, un fonctionnement véritablement continu.

Les procédés de prémétallisation rappelés ci-dessus, s'ils donnent satisfaction au point d'être industriellement mis en oeuvre pour des productions à grande échelle, présentent néanmoins les inconvénients décrits.

Il est par ailleurs, d'un point de vue général, toujours souhaitable de chercher à réduire les coûts des procédés existants et de rendre plus aisée leur mise en oeuvre, et par suite d'abaisser le coût des produits correspondants. Ce sont deux des avantages obtenus grâce à la présente invention.

La présente invention a pour objet, à travers une adaptation spécifique et originale d'un processus connu pour des applications de réalisation plus simple, de permettre la métallisation galvanique des structures poreuses complexes définies ci-dessus, par la mise en oeuvre d'une prémétallisation opérée par dépôt préalable d'un polymère conducteur, la métallisation ultérieure pouvant elle-même être réalisée dans des conditions spécifiques liées à la nature de la couche de prémétallisation.

L'utilisation de polymères conducteurs a déjà été décrite pour permettre la réalisation de dépôts galvaniques. Cette utilisation, comme d'autres techniques de prémétallisation auparavant, a été conçue, définie et rendue opérationnelle, pour application au traitement de surfaces simples ou relativement simples : surfaces lisses, ou surfaces lisses reliées par des trous de diamètre supérieur à 0,5 mm, la profondeur des trous étant de l'ordre de 1 mm. Il s'est notamment agi de la prémétallisation de plaquettes de circuits imprimés.

Le traitement de prémétallisation des structures poreuses complexes décrites plus haut, au moyen du dépôt de polymères conducteurs, ne découle pas directement de la mise en oeuvre utilisée pour la sensibilisation de surfaces simples. Sa réalisation a d'ailleurs connu diverses tentatives infructueuses de mise au point, comme on le comprendra à travers les développements qui suivent.

On le sait, les dépôts de métaux ou d'alliages dont les techniques peuvent être bien connues et maîtrisées pour des surfaces lisses, peuvent s'avérer irréalisables ou demander la mise en oeuvre des procédés spécifiques lorsque l'on souhaite les réaliser sur des surfaces complexes. Il en est ainsi, à titre d'exemple, des dépôts de chrome. Il en est de même pour l'obtention d'un dépôt continu de polymère conducteur sur les structures poreuses complexes de l'application, dépôt qui autorise de manière efficace, au stade industriel, la réalisation ultérieure d'un dépôt électrochimique, dans toute l'épaisseur de la structure, sur l'ensemble de la surface développée de celle-ci, sans colmatage de sa porosité.

La spécificité de mise au point d'une technique de dépôt adéquate tient non seulement à la tortuosité extrême des structures à traiter, à leur épaisseur, à la faible dimension des espaces inter-fibres ou des pores, mais également à la nature chimique du matériau de base (le plus souvent de type organique) et à sa présence sous forme particulièrement divisée (fibres et mailles de quelques microns d'épaisseur).

La couche de polymère conducteur est obtenue par polymérisation d'un monomère déposé sur les fibres ou mailles du substrat à traiter. Cette polymérisation est effectuée par oxydation-dopage du monomère.

Certains monomères tels que le pyrrole, le furane, le thiophène et certains de leurs dérivés, et notamment les monomères fonctionnalisés, ont la faculté de pouvoir être oxydés en polymères présentant la caractéristique d'être électriquement conducteurs.

Dans certains des procédés de cette nature, le dépôt du polymère a lieu en phase gazeuse, mais on comprendra aisément qu'un tel procédé par voie gazeuse est complexe et difficile à mettre en oeuvre au sein de structures à haute porosité.

Dans d'autres procédés, qui concernent eux aussi le traitement de surfaces poreuses ou non (et qui seront donc mal adaptés au traitement spécifique de surfaces très poreuses), on travaille à tous les niveaux en phase humide (liquide) dans des conditions opératoires bien précises, ce qui présenterait, dit-on du moins, l'avantage de rendre inutile tout rinçage entre les différentes étapes. Or ceci est clairement contraire aux enseignements de la présente invention, comme cela va être exposé en détail ci-après. Il est probable que ce procédé, au même titre que celui qui est mentionné juste avant, minimise les contraintes inhérentes aux surfaces poreuses en prétendant pouvoir s'appliquer indifféremment à tous les types de surfaces.

D'autres procédés enfin procèdent à la polymérisation du monomère déposé en surface du support par voie anodique et diffèrent en cela radicalement du procédé selon l'invention.

L'invention en effet, qui concerne des structures poreuses complexes de type mousse réticulée, feutre ou tissu, prémétallisées en leur sein et un procédé pour la fabrication de telles structures comprend la suite des étapes suivantes :
(1) prétraitement oxydant de la structure de base, en phase humide
(2) rinçage, éventuellement complété par égouttage et séchage,
(3) dépôt, à la surface des fibres ou mailles de la structure, d'un monomère dont une forme polymérisée soit conductrice de l'électricité, en phase humide,
(4) égouttage et/ou essorage éventuels,
(5) polymérisation du monomère, par oxydation-dopage, en un polymère électriquement conducteur, en phase humide
(6) rinçage, et éventuel égouttage,
(7) séchage éventuel
ces étapes étant effectuées au sein de la structure, dans toute l'épaisseur de celle-ci, en surface de chacune de ses fibres ou mailles, sans colmater sa porosité, et les étapes (3) à (7) pouvant être répétées dans le même ordre plusieurs fois.

L'invention concerne également un procédé de réalisation de structures poreuses complexes métalliques ou métallisées, qui comprend des étapes de prémétallisation par polymère conducteur et de métallisation électrochimique de mousses, feutres ou tissus organiques ou minéraux, éventuellement suivies d'une pyrolyse des matériaux d'origine et de prémétallisation et d'un traitement thermique sous atmosphère contrôlée du (des) dépôt(s) métallique(s), dans lequel la prémétallisation comprend elle-même les étapes suivantes :
(1) prétraitement oxydant de la structure de base, en phase humide
(2) rinçage, éventuellement complété par égouttage et séchage,
(3) dépôt, à la surface des fibres ou mailles de la structure, d'un monomère dont une forme polymérisée soit conductrice de l'électricité, par voie humide,
(4) égouttage et/ou essorage éventuels,
(5) polymérisation du monomère, par oxydation-dopage, en un polymère électriquement conducteur, en phase humide
(6) rinçage, et éventuel égouttage,
(7) séchage éventuel
ces étapes étant effectuées au sein de la structure, dans toute l'épaisseur de celle-ci, en surface de chacune de ses fibres ou mailles, sans colmater sa porosité, et les étapes (3) à (7) pouvant être répétées dans le même ordre plusieurs fois.

Ainsi et contrairement à ce qui est évoqué ci-dessus, les étapes de rinçage sont des étapes importantes dont dépendent la qualité des couches prémétallisées obtenues, et par voie de conséquence, des électrodes finales. On insistera en particulier sur le dernier rinçage qui permet d'éliminer les impuretés, dont le fer, susceptibles de demeurer dans le produit fini après métallisation électrolytique et traitements thermiques.

Par l'expression "phase humide", on entend se référer ci-après à un traitement en phase liquide, par exemple en solution, ou à un traitement au contact d'un brouillard qui, par définition, contient de fines gouttelettes liquides.

L'étape initiale (1) de prétraitement oxydant revêt une grande importance pour la réussite de l'opération de prémétallisation lorsqu'elle est conduite au sein d'une structure poreuse complexe. En effet, il importe que la métallisation électrochimique, qui suivra le traitement de prémétallisation, s'opère de la manière la plus régulière possible, au sein même de la structure, sur l'intégralité de la surface de chacune des fibres ou mailles de ladite structure. La structure métallisée doit être l'exacte réplique de la structure initiale avant traitements. Il convient donc que chaque fibre ou maille, dans tout le volume interne de la structure aussi bien qu'à sa surface, ait été rendue conductrice lors du traitement de prémétallisation. Il est pour cela indispensable que le dépôt du monomère, avant sa transformation ultérieure en polymère conducteur, s'effectue sur la totalité de la surface des fibres ou mailles, sans colmatage de la porosité superficielle et interne. Le monomère doit être fixé sur les fibres ou mailles, et non pas de manière plus ou moins libre au sein de la structure en remplissant partiellement ou en pontant les espaces inter-fibres ou les pores.

Or il apparaît que lorsque le prétraitement oxydant, avant dépôt du monomère, n'est pas effectué de manière appropriée, le monomère a tendance à précipiter de manière anarchique au sein de la structure en ne respectant pas l'architecture initiale de celle-ci et en ne revêtant pas l'intégralité des fibres ou mailles de ces structures épaisses, denses et complexes.

Le prétraitement oxydant est de manière préférentielle mais non limitative de l'invention, réalisé par immersion de la structure dans une solution contenant des sels de permanganate, manganate et/ou composés de cérium IV. Il peut également être effectué par pulvérisation au sein de la structure de la solution, ou par maintien de la structure dans un brouillard de même composition.

Le prétraitement oxydant présente une double fonction essentielle pour la réalisation des produits selon l'invention :
- localiser la précipitation du monomère à la surface même des fibres ou mailles au sein de la structure poreuse complexe,
- participer à la polymérisation du monomère par la face inférieure ou cachée de son dépôt.

Le prétraitement permet, préparant ainsi un dépôt adéquat du monomère, de réaliser une attaque chimique superficielle des fibres ou mailles constituant l'ossature de la structure à traiter. Une sensibilisation de surface est réalisée sous la forme d'une attaque du matériau organique constitutif, provoquant l'apparition d'une microporosité de surface et par là même la constitution d'une excellente surface d'accrochage du dépôt ultérieur de monomère, lequel précipitera alors préférentiellement sur cette surface d'accrochage plutôt que de manière anarchique dans la porosité de la structure. Le colmatage de la structure à traiter peut ainsi être évité.

Une telle préoccupation n'existe évidemment pas lorsque la prémétallisation et la métallisation sont à opérer sur des surfaces simples ou relativement simples, par exemple des surfaces non poreuses.

La seconde fonction de ce prétraitement oxydant est tout aussi fondamentale lorsque l'on sait que la métallisation qui devra suivre la prémétallisation par polymère conducteur, doit elle-même être opérée au sein de la structure poreuse complexe, dans toute son épaisseur, par enrobage homogène et continu des fibres ou mailles, sans colmatage de la porosité interne et de surface. La métallisation galvanique de telles structures tridimensionnelles denses, impose, pour s'effectuer de manière correcte jusqu'au coeur de la structure, que la prémétallisation ait conféré à chaque point de celle-ci un niveau de conduction électrique suffisant.

La finesse des fibres ou mailles, la finesse du dépôt de monomère et donc du polymère issu de son oxydation, et le niveau limité de conduction intrinsèque du polymère obtenu, contraignent à l'obtention d'une polymérisation la plus complète possible du monomère dont la précipitation a été obtenue.

Pour cela, il importe que la couche de monomère puisse subir l'attaque oxydante devant conduire à sa polymérisation, non seulement par sa surface, mais aussi par sa face cachée, inférieure, qui adhère à la surface d'accrochage des fibres ou mailles de la structure. Cette face inférieure est protégée de l'action oxydante-dopante de l'étape (5) mentionnée plus haut. Il est très important, pour l'obtention d'une couche de prémétallisation suffisamment polymérisée, et par conséquent suffisamment conductrice, que la polymérisation du monomère puisse s'opérer à partir de ses deux faces.

Cette contrainte est inconnue lorsque la métallisation à réaliser ultérieurement doit l'être sur une surface simple ou relativement simple. Les conditions opératoires du prétraitement oxydant sont également nettement moins sensibles lorsque, dans le cas connu de traitement de plaquettes de circuits imprimés, le matériau à traiter se présente sous la forme d'une plaque continue épaisse (de l'ordre du millimètre d'épaisseur). L'attaque chimique provoquée par le prétraitement oxydant ne peut rapidement dégrader de manière indésirable la plaque soumise à son action.

Il en est tout autrement lorsque l'on traite les structures poreuses complexes selon l'invention, dont les fibres ou mailles présentent une épaisseur de l'ordre de quelques microns. L'attaque oxydante peut alors, si elle n'est pas conduite de manière appropriée, fragiliser la structure, voire aboutir à des ruptures de fibres ou mailles. L'acidité de la solution de prétraitement, sa température et la durée de l'opération, tout comme l'efficacité du ou des rinçages ultérieurs constituent alors des paramètres pointus à adapter de manière spécifique à la structure traitée.

La deuxième étape (2) du processus opératoire de prémétallisation est donc celle du rinçage de la structure après traitement oxydant. Les structures selon l'invention, qu'il s'agisse de mousses, de feutres ou de tissus, présentent un haut pouvoir de rétention des liquides. Il est donc important, pour que l'attaque oxydante du prétraitement ne se prolonge pas de manière indésirable, de procéder, dès la fin dudit prétraitement, à une phase de rinçage minutieuse. L'opération peut être, selon le matériau et la structure traités, réalisée en un ou plusieurs rinçages successifs, en milieu neutre ou légèrement acide, en bain mort, bain de rinçage sous courant et/ou douchage de la structure. Il s'agit là de constatations contraires à ce qu'on peut trouver dans la littérature (voir plus haut). Des essorages peuvent être pratiqués.

Comme après chaque étape de traitement humide - étapes (1), (3), et (5) du procédé - un égouttage de la structure, préalablement aux rinçages éventuellement nécessaires, peut permettre une récupération économique d'excédents de fluides et composés actifs. Un séchage peut également suivre.

La troisième étape (3) du procédé de prémétallisation selon l'invention, consiste dans le dépôt ou précipitation du monomère choisi en phase humide.

Cette étape est préférentiellement pratiquée par immersion de la structure dans une solution dudit monomère. Elle peut également, dans le cadre de la présente invention, être effectuée par pulvérisation au sein de la structure de ladite solution, ou par maintien de la structure dans un brouillard de même composition.

On peut choisir de déposer un ou plusieurs monomères dont la forme polymérisée soit électriquement conductrice. Le choix se porte préférentiellement, et de manière non limitative, sur le pyrrole, le furane, le thiophène, et/ou leurs dérivés.

Il est important, et propre à l'invention, d'effectuer un choix judicieux de monomère et de l'ensemble des composants de la solution de précipitation. L'objectif double poursuivi à ce stade est :
- d'éviter l'emploi d'un monomère et d'un solvant susceptibles, au stade industriel, d'être à l'origine de problèmes de sécurité (toxicité pour les opérateurs, danger de pollution par génération d'effluents liquides à retraiter, formation d'un polymère dont l'élimination thermique après métallisation serait elle-même à l'origine d'effluents gazeux dangereux) ;
- de mettre en oeuvre des produits dont le coût matière et le coût de mise en oeuvre soient compatibles avec la nécessaire recherche d'un procédé économique de prémétallisation.

Il convient enfin, pour application du procédé à la précipitation de monomère dans une structure poreuse complexe selon l'invention, que la solution de monomère ait un degré de viscosité compatible avec une bonne pénétration au sein de la structure, de manière à pouvoir aisément imprégner ladite structure dans toute son épaisseur, sans obstruction et sans formation de bulles d'air au sein de la porosité interne, qui nuiraient à la réalisation d'une précipitation continue sur la totalité de la surface des fibres ou mailles de la structure.

L'étape (4) du traitement de prémétallisation des structures selon l'invention consiste en un égouttage et/ou essorage éventuels des structures, étape qui conditionne la qualité des produits finis.

La cinquième étape (5) est celle de la polymérisation du (des) monomère(s) en phase humide. Celle-ci est obtenue, de manière préférentielle mais non limitative de l'invention, par immersion de la structure à traiter dans une solution oxydante-dopante choisie pour conduire au(x) polymère(s) désiré(s). Elle peut également, dans le cadre de la présente invention, être effectuée par pulvérisation au sein de la structure de ladite solution, ou par maintien de la structure dans un brouillard de même composition.

Cette polymérisation intervient à partir de la face externe du dépôt de monomère effectué en étape (3), et gagne progressivement vers l'intérieur de la couche de monomère précipité sur les fibres ou mailles de la structure.

Comme on l'a vu plus haut, il est important que la polymérisation se développe également à travers la face interne du dépôt de monomère, réaction provoquée par le choix judicieux du prétraitement oxydant de l'étape (1), et qui a commencé à se dérouler dès l'étape (3) de précipitation du monomère.

La polymérisation doit être suivie d'une étape (6) de rinçage de la structure, qui peut être réalisée de la même manière que le rinçage de l'étape (2), opérations l'une comme l'autre indispensables.

Le traitement de prémétallisation peut être achevé par une étape (7) de séchage, naturel ou forcé, de la structure traitée.

Les étapes (3) à (7) peuvent éventuellement être répétées, avec respect de la même séquence, pour l'obtention du dépôt polymère recherché, offrant la conductivité électrique requise pour la métallisation ultérieure.

Afin de fixer les idées, les divers critères et paramètres que de préférence on respectera pour l'obtention de résultats optimum sont repris dans les exemples et le tableau suivant, donnés à titre non limitatif.

On décrira ainsi ci-après la réalisation complète, selon un mode préférentiel de mise en oeuvre de l'invention, d'un traitement de prémétallisation par dépôt de polymère conducteur, puis de métallisation électrochimique d'une structure poreuse complexe.

### EXEMPLE 1

La structure à métalliser est une mousse de polyuréthanne de grade ppl 100, d'épaisseur 1,7 mm, désoperculée, dont la densité est de 50 g/m² de surface apparente.

L'étape (1) de prétraitement oxydant est réalisée par immersion de la mousse durant 4 minutes dans une solution aqueuse de permanganate de potassium (KMnO₄), de concentration 20 g/litre, de pH sensiblement égal à 7. Un pH acide peut conduire à une attaque trop brutale de la mousse. L'immersion s'opère dans une solution dont la température est située entre 70 et 80°C.

L'utilisation de cette solution de prétraitement offre l'avantage de conduire à la formation, à la surface des mailles de la mousse, d'une couche de bioxyde de manganèse (MnO₂). Lorsque sera ultérieurement réalisée la précipitation du monomère, le MnO₂ passera, au moins partiellement, à son contact, à un état inférieur d'oxydation, provoquant par là même l'oxydation, et donc la polymérisation, du monomère par sa face inférieure.

L'étape (2) de rinçage est réalisée, après un premier égouttage, par immersion de la mousse dans un bain mort d'eau, puis par douchage de la mousse, également à l'eau.

La mousse est ensuite égouttée quelques instants, et partiellement séchée sous air chaud.

L'étape (3) de précipitation de monomère est effectuée par immersion de la mousse dans une solution de pyrrole (C₄H₅N) dans un mélange éthanol/eau, propanol/eau ou isopropanol/eau.

Le pyrrole est connu pour être aisément soluble dans le benzène. L'utilisation du benzène au stade industriel posant de réels problèmes de sécurité pour les opérateurs comme pour l'environnement, un autre solvant du pyrrole a été recherché, et le choix d'un alcool inférieur, notamment de l'isopropanol a été retenu. Celui-ci permet de surcroît de réaliser la dissolution du pyrrole dans une solution aqueuse pouvant contenir plus de 50 % d'eau en volume.

La composition utilisée dans l'exemple est la suivante :
80 cm³/litre de pyrrole
120 cm³/litre d'isopropanol
800 cm³/litre d'eau

La température retenue pour la solution est préférentiellement inférieure à l'ambiante, et située, pour la réalisation selon l'exemple, à 15°C et la durée d'immersion de la mousse est de 10 à 15 minutes.

Pour la préparation de la solution, l'eau peut être ajoutée au pyrrole avant ou après l'isopropanol. La dissolution est cependant plus aisée si l'isopropanol est ajouté en premier.

La quantité de pyrrole déposée au terme de cette étape est de quelques grammes par mètre carré de surface apparente de la mousse, et, dans le présent exemple, de 5 g/m².

On notera que le choix du pyrrole d'une part, de l'isopropanol d'autre part, d'une solution aqueuse enfin, rendent cette étape particulièrement bon marché, et à travers elle l'ensemble de la méthode de prémétallisation selon l'invention.

Il est ensuite procédé à un égouttage de la mousse - étape (4) - durant une quinzaine de secondes.

L'étape (5) de polymérisation du pyrrole en polypyrrole est effectuée par immersion de la mousse dans une solution aqueuse oxydante-dopante de composition suivante :
50 g/litre de chlorure ferrique FeCl₃
50 cm³/litre d'acide fluoroborique BF₄ à 34 %

La température de la solution est d'environ 20°C, et la durée du traitement de polymérisation de 10 à 15 minutes.

Il est procédé enfin à un rinçage en bain mort d'eau, puis à un douchage de la mousse à l'eau, avant un séchage à l'air chaud.

Après une unique séquence de précipitation / polymérisation, la mesure de résistance de la mousse donne des valeurs comprises entre 250 et 500 Ω.carrés.

### EXEMPLE 2

Le traitement de prémétallisation est appliqué à un feutre de polyester, d'épaisseur 1,5 mm et dont la masse est de 80 g/m² de surface apparente.

Les étapes décrites en exemple ci-dessus sont reproduites à l'identique, la seule modification intervenant au niveau de l'étape (1), pour laquelle il est possible et préférable que le pH de la solution soit de 3,5.

Le tableau ci-après résume, sous forme synoptique, les choix des paramètres techniques des exemples précédents, conduisant à des résultats optimum :

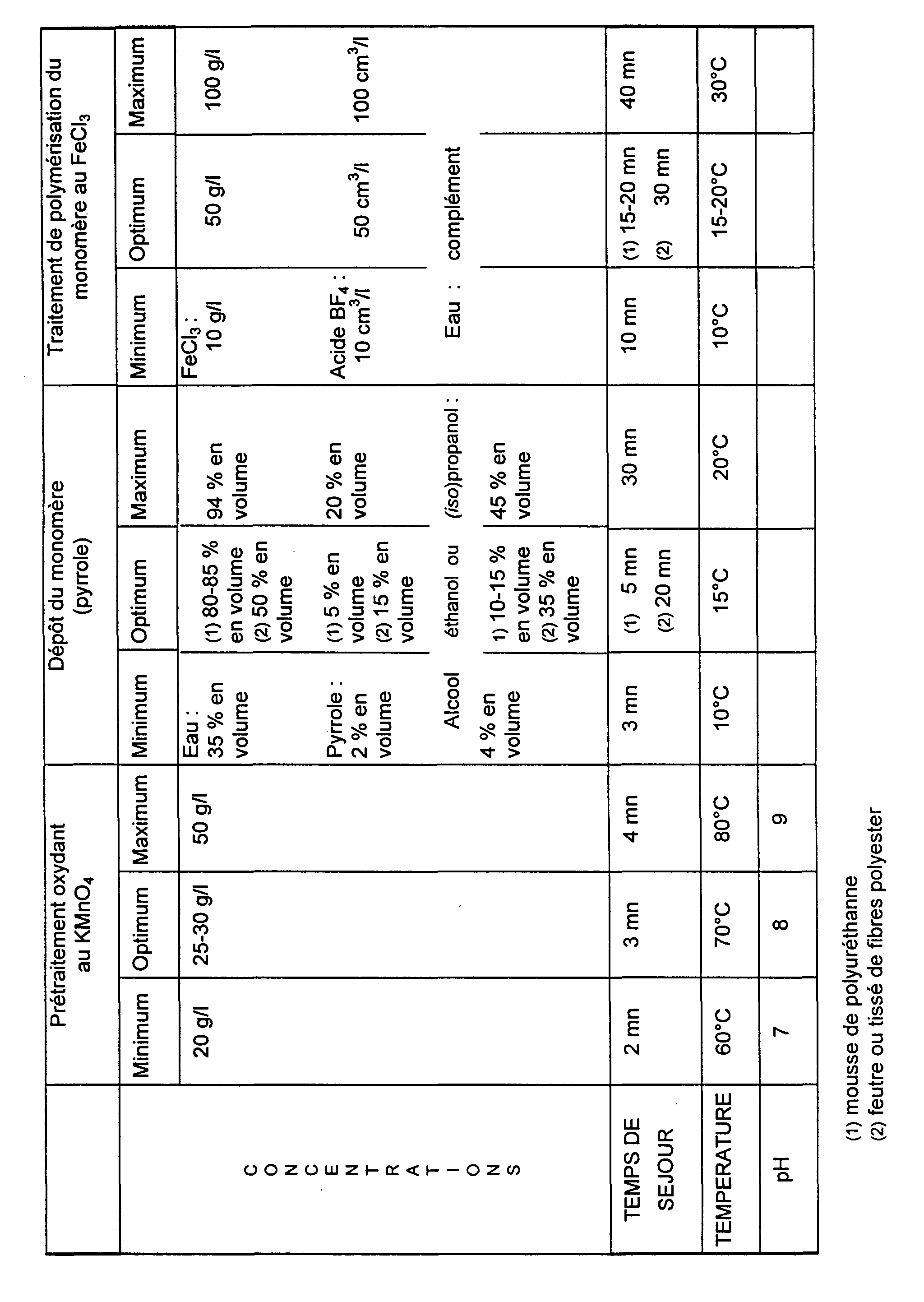

Ce tableau, ainsi que les commentaires qui suivent, mettent clairement en évidence l'influence exercée par les divers paramètres techniques énoncés. Il concerne des mousses de polyuréthanne et feutres ou tissés de fibres polyester.

### Prétraitement au KMnO₄ :

- pour des concentrations inférieures au minimum indiqué : insuffisance du dépôt de Mn0₂, entraînant un dépôt de pyrrole et polypyrrole insuffisant et une résistance électrique trop élevée,
- pour des concentrations supérieures au maximum indiqué : accroissement du dépôt de MnO₂ (gaspillage) mais quantité de polypyrrole fixée non augmentée et résistance électrique excessive ; de plus, fragilisation de la structure mousse avec risques de déchirures.

### Traitement de dépôt du pyrrole :

- l'alcool (éthanol ou propanol) a pour fonction de solubiliser le pyrrole,
- plus forte est la concentration en pyrrole, plus on en dépose, mais au-delà de 5 % en volume on n'accroît plus la conductivité finale.

### Traitement de polymérisation du pyrrole :

- la quantité de polypyrrole formée s'accroît avec la concentration en FeCl₃ jusqu'à ce que celle-ci atteigne 50 g/l,
- pour un temps de traitement inférieur au minimum indiqué, la quantité de polypyrrole formée est insuffisante,
- pour un temps de traitement supérieur au maximum indiqué, la morphologie du dépôt de polypyrrole devient anarchique : revêtement non plus lisse des mailles ou fibres, mais formation filamentaire au sein de la porosité de la structure.

### Etape intermédiaire de rinçage (à l'eau) après le prétraitement au KMnO₄ :

- doit être menée avec soin pour un rinçage le plus efficace possible afin d'éviter l'entraînement de permanganate dans le sel de bain de pyrrole (gaspillage).

### Etape intermédiaire d'essorage après le dépôt du pyrrole :

- afin d'éviter un gaspillage de pyrrole (sans essorage, on peut entraîner 5 à 10 fois la quantité déposée utile),
- afin d'éviter une usure de la solution de polymérisation,
- cet essorage peut être réalisé par passage de la structure entre deux rouleaux (sans excès de pression), ou par aspiration ou soufflage de la solution entraînée,
- il ne faut pas effectuer à ce stade de rinçage, qui provoquerait un retrait nuisible du pyrrole déposé.

### Etape finale après polymérisation :

- rinçage de la structure à l'eau,
- séchage.

### EXEMPLE 3

La métallisation électrochimique peut alors être conduite sur la mousse ou le feutre prémétallisé.

Diverses métallisations sur des mousses traitées selon la procédure décrite en exemple ci-dessus ont été réalisées, par dépôts électrolytiques de cuivre, nickel et plomb.

On a, notamment, réalisé en bain de Watt un dépôt de nickel dont la densité était de 450 g/m² de surface apparente, réparti sur l'intégralité de la surface développée de la mousse.

Selon l'invention, l'obtention du dépôt métallique sur prémétallisation par polymère conducteur, peut être favorisée par la mise en oeuvre de techniques ayant pour objet de préserver, durant la phase initiale de la métallisation, le niveau de conductivité du polymère.

Trois techniques répondant à cet objectif et entrant dans le cadre de la présente invention, ont été mises en oeuvre sur des mousses prémétallisées selon l'exemple ci-dessus :
- métallisation effectuée dans un bain contenant des ions stabilisants ou oxydants de la structure anodique ;
- amorçage du dépôt galvanique sous une faible densité de courant ;
- électrolyse sous courant pulsé avec inversion de courant.

Ces trois procédures, ou deux quelconques d'entre elles, peuvent être combinées pour optimiser les conditions du dépôt électrolytique sur polymère conducteur.

La première de ces procédures a pour objet d'apporter, à l'interface polymère/électrolyte, une fonction stabilisante ou oxydante de nature à contrebalancer l'effet réducteur de l'électrolyse sur la structure à métalliser, placée en anode dans le bain, et plus particulièrement sur son revêtement conducteur. Or une action réductrice sur le polymère a pour effet de réduire sa conductivité et donc d'entraver l'amorçage du dépôt électrochimique, et ce spécialement en profondeur au sein de la structure.

Pour cela, la métallisation selon une variante préférentielle de l'invention, est effectuée, pour le dépôt de nickel, dans un bain contenant des ions stabilisants ou oxydants du dépôt conducteur anodique.

La deuxième technique de soutien à l'amorçage du dépôt galvanique, selon l'invention, consiste, afin d'éviter de dégrader la couche de polymère conducteur avant que ne soit constitué à sa surface un premier revêtement métallique continu ou quasiment continu, de conductivité au moins égale à celle du polymère, à pratiquer une électrolyse sous faible densité de courant, par exemple progressant d'environ 1 à 4 A/dm² de surface apparente de la structure dans le cas d'un bain de nickelage de type bain de Watt.

Dès que le revêtement métallique a gagné sur l'ensemble ou l'essentiel de la surface développée de la structure, la conduction de celle-ci est suffisamment renforcée (et le polymère protégé) pour que l'électrolyse puisse alors être poursuivie à densité de courant normale pour un dépôt à vitesse rapide, soit par exemple de l'ordre de 6 A/dm² en bain de Watt.

La troisième technique d'optimisation des conditions de métallisation selon l'invention, est également mise en oeuvre avec pour objectif de préserver un niveau suffisant de conduction électrique pour le polymère, durant la phase initiale du dépôt électrochimique, au moins jusqu'à formation d'un revêtement métallique de conductivité supérieure ou égale. L'électrolyse ayant une action réductrice sur le conducteur anodique que constitue le dépôt polymère de la structure à métalliser, il est apparu efficace de la conduire sous courant pulsé avec inversion de courant, afin qu'à chaque inversion du courant, une action oxydante vienne compenser l'action réductrice précédente.

Les structures poreuses complexes métalliques ou métallisées selon l'invention peuvent être, de manière non limitative de l'invention, métallisées par dépôt de cuivre, nickel, fer, chrome, zinc, aluminium, plomb, étain, or, platine ou tout autre métal de la mine du platine, ou par dépôt d'alliage, mélange ou superposition de deux quelconques au moins de ces métaux.

Les structures poreuses complexes métallisées selon l'invention, peuvent faire l'objet ou non, après métallisation(s), d'un traitement thermique de pyrolyse des matières d'origine et ajoutées durant la prémétallisation, et d'un traitement thermique du (des) dépôt(s) métallique(s) sous atmosphère contrôlée.

Les structures métallisées obtenues à partir des structures prémétallisées selon l'invention sont particulièrement destinées aux utilisations à titre d'électrodes pour électrolyse d'effluents liquides, de supports d'électrodes pour générateurs électrochimiques, de supports de catalyse, de media filtrants, d'isolants phoniques, de structures de protection électromagnétique et nucléaire, ou autres.

### EXEMPLES COMPARATIFS

II faut bien comprendre qu'il est nécessaire, pour être en mesure de réaliser une métallisation électrolytique dans de bonnes conditions de vitesse de dépôt et de régularité de celui-ci, que les résistances obtenues soient au maximum d'environ 50 Ω.carrés. Le respect des conditions opératoires ci-dessus définies permet d'obtenir des valeurs moyennes d'environ 25 Ω.carrés pour les mousses de polyuréthanne (situées entre environ 15 et 30 Ω.carrés), et d'environ 30 à 40 Ω.carrés pour les structures fibreuses tissées ou non tissées.

La mesure de résistance exprimée en Ω.carrés est effectuée en lisant la résistance prise entre deux carrés de tôle de laiton, carrés de côté a cm distants entre eux de a cm et plaqués sur la structure traitée. Il est usuel d'utiliser des carrés de 1 cm de côté distants de 1 cm.

Il est à noter que d'autres types d'activation conductrice permettent des métallisations électrolytiques efficaces avec des résistances supérieures. Par exemple, de l'ordre de 1 000 Ω.carrés par pulvérisation cathodique de nickel, ou de 1 500 Ω.carrés avec dépôt de poudre de carbone. Des valeurs beaucoup plus faibles (≅ 50 Ω.carrés) sont nécessaires dans le cas du dépôt de polypyrrole.

Afin de mesurer l'efficacité du traitement d'activation conductrice, un test de métallisation peut être effectué dans les conditions suivantes : une plaque de mousse activée de grade 100 ppl (pores par pouce linéaire, mesure de comptage des pores internationalement utilisée) est immergée dans un bain d'électrolyse de nickel, de type sulfamate, de concentration 600g/l de sulfamate de nickel, 10g/l de chlorure de nickel, et 30 g/l d'acide borique, de pH 4, de température 50°C. On impose une densité de courant de 15 A/dm². La plaque de mousse activée mesure 10 x 15 cm, le courant étant amené par la largeur supérieure, à la surface du bain.

Dans de telles conditions, une plaque de résistance initiale 25 Ω.carrés est intégralement recouverte de nickel après 5 mn d'électrolyse, une plaque de résistance initiale de 100 à 150 Ω.carrés n'est recouverte que sur moins de sa moitié supérieure. Une plaque activée par la méthode du dépôt de poudre de carbone est généralement métallisée sur environ un tiers de sa surface.

Naturellement, et comme il résulte d'ailleurs largement de ce qui précède, l'invention n'est pas limitée aux modes de réalisation particuliers qui n'ont été décrits qu'à titre d'exemples.

## Revendications

1. Procédé de réalisation d'une structure poreuse complexe de type mousse réticulée, feutre ou tissu, activée pour la rendre électriquement conductrice et destinée à être métallisée en son sein par dépôt électrochimique sur l'ensemble de la surface développée, dans lequel l'activation par dépôt d'un polymère conducteur comprend les étapes suivantes :
(3) dépôt, à la surface des fibres ou mailles de la structure, d'un monomère dont une forme polymérisée soit conductrice de l'électricité, en phase humide,
(4) égouttage et/ou essorage éventuels,
(5) polymérisation du monomère, par oxydation-dopage, en un polymère électriquement conducteur, en phase humide
(6) rinçage, et éventuel égouttage,
(7) séchage éventuel,
caractérisé en ce que l'étape (3) du dépôt du monomère est précédé des étapes suivantes :
(1) prétraitement oxydant de la structure de base, en phase humide
(2) rinçage, éventuellement complété par égouttage et séchage,
ces étapes étant effectuées au sein de la structure, dans toute l'épaisseur de celle-ci, en surface de chacune de ses fibres ou mailles, sans colmater sa porosité, et les étapes (3) à (7) pouvant être répétées dans le même ordre plusieurs fois.

2. Procédé selon la revendication 1, caractérisé en ce que l'étape de prétraitement oxydant est effectuée au moyen d'une solution de permanganate de potassium.

3. Procédé selon la revendication 2, caractérisé en ce que l'étape de prétraitement oxydant est effectuée par immersion dans une solution de permanganate de potassium.

4. Procédé selon la revendication 1, caractérisé en ce que le monomère déposé est du pyrrole, du furane, du thiophène ou certains de leurs dérivés, et notamment les monomères fonctionnalisés.

5. Procédé selon la revendication 4, caractérisé en ce que le monomère déposé est le pyrrole, et le polymère conducteur correspondant formé par oxydation du pyrrole, le polypyrrole.

6. Procédé selon la revendication 4, caractérisé en ce que le solvant utilisé pour la dissolution du pyrrole est un alcool, notamment de l'isopropanol.

7. Procédé selon les revendications 5 et 6, caractérisé en ce que la solution de pyrrole, utilisée pour effectuer le dépôt de monomère sur la surface développée de ladite structure, est une solution aqueuse contenant au moins 50 % d'eau en volume, et dans laquelle le solvant du pyrrole est l'isopropanol.

8. Procédé selon les revendications 5 et 6, caractérisé en ce que la structure est immergée, pour précipitation du monomère, dans une solution aqueuse contenant au moins 50 % d'eau en volume, et dans laquelle le solvant du pyrrole est l'isopropanol.

9. Structure activée obtenue par le procédé selon l'une quelconque des revendications précédentes, cette structure présentant un dépôt homogène de polymère conducteur à la surface de la structure poreuse.

10. Procédé de réalisation d'une structure métallisée à partir de la structure selon la revendication 9, caractérisé en ce que le dépôt électrochimique de métallisation est conduit dans un bain d'électrolyse contenant des ions stabilisants ou oxydants de la structure anodique.

11. Procédé selon la revendication 10, caractérisé en ce que le dépôt électrochimique de métallisation est conduit sous courant pulsé, avec inversions de courant, au moins durant la phase initiale d'électrolyse, c'est-à-dire jusqu'à constitution d'un dépôt métallique de conduction au moins égale à celle conférée à la structure par le polymère conducteur.

12. Procédé selon la revendication 10 ou 11, caractérisé en ce que le dépôt électrochimique de métallisation est conduit, durant la phase initiale d'électrolyse, c'est-à-dire jusqu'à constitution d'un dépôt métallique de conduction au moins égale à celle conférée à la structure par le polymère conducteur, sous faible régime de courant.

13. Procédé selon l'une des revendications 10 à 12, caractérisé en ce que le dépôt métallique opéré après l'activation par dépôt de polymère conducteur, est constitué par du cuivre, du nickel, du fer, du chrome, du zinc, de l'aluminium, de l'étain, du plomb, de l'or, du platine ou tout autre métal de la mine du platine, ou un alliage, mélange ou superposition de deux quelconques au moins de ces métaux.

14. Structure métallisée obtenue selon l'une quelconque des revendications 10 à 13, cette structure présentant un dépôt homogène de polymère conducteur à la surface de la structure poreuse.

## Claims

1. A process of producing a complex porous structure of reticulated foam, felt or fabric type, pre-metallized to be electrically conductive and to be metallized by electroplating with a metal throughout its entire thickness over all its developed surface, in which the pre-metallization by depositing a conductive polymer comprises the following steps :
(3) deposit on the surface of the fibers or openings of the structure, of a monomer which in a polymerized form is electrically conductive, in a wet phase
(4) possible natural draining or forced draining,
(5) polymerization by oxidation-doping of the monomer into an electrically conductive polymer, in a wet phase,
(6) rinsing, and possible draining,
(7) possible drying
characterized in that the deposit of the monomer is preceded by the following steps
(1) oxidizing pre-treatment of the base structure, in a wet phase,
(2) rinsing, possibly followed by draining and drying,
wherein these steps are carried out within the structure, throughout its entire thickness, over the surface of each of its fibers or openings, without clogging its pores, and steps (3) to (7) may be repeated in the same order several times.

2. A process according to claim 1, characterized in that the oxidizing pre-treatment step is carried out by means of a solution of potassium permanganate.

3. A process according to claim 2, characterized in that the oxidizing pre-treatment step is carried out by immersion in a solution of potassium permanganate.

4. A process according to claim 1, characterized in that the monomer deposited is pyrrole, furane, thiophene or certain derivatives thereof, notably functional monomers.

5. A process according to claim 4, characterized in that the monomer deposited is pyrrole, and the corresponding conductive polymer formed by oxidation of the pyrrole is polypyrrole.

6. A process according to claim 4, characterized in that the pyrrole is dissolved in an alcohol, notably isopropanol.

7. A process according to claims 5 and 6, characterized in that the pyrrole solution used to carry out deposition of the monomer onto the developed surface of said structure is an aqueous solution containing at least 50% by volume water, and in which the solvent for the pyrrole is isopropanol.

8. A process according to claims 5 and 6, characterized in that the monomer is precipitated by immersing the structure in an aqueous solution containing at least 50 % water by volume, and in which the solvent of the pyrrole is isopropanol.

9. A pre-metallized structure obtained by the process according to any of the preceding claims, said structure having an homogenous deposit of conductive polymer on the surface of the porous surface.

10. A process of producing a metallized structure from the structure according to claim 9, characterized in that the metallization electroplating is carried out in an electrolysis bath containing ions which stabilize or oxidize the anodic structure.

11. A process according to claim 10, characterized in that electroplating is carried out under pulsed current with current reversals, at least during the initial phase of electrolysis, i.e. until formation of a metallic deposit whose conductivity is at least equal to that of the conductive polymer structure.

12. A process according to claim 10 or 11, characterized in that the electroplating is carried out during an initial electrolysis phase, until constitution of a metallic deposit of conductivity at least equal to that of the conductive polymer structure, at a low current density.

13. A process according to any one of claims 10 to 12, characterized in that metal plated after the pre-metallization by deposit of the conductive polymer, is constituted of copper, nickel, iron, chromium, zinc, aluminium, tin, lead, gold, platinum or any other platinum family metal, or an alloy mixture or superposition of at least two of said metals.

14. A metallized structure obtained according to any of claims 10 to 13, said structure having an homogenous deposit of conductive polymer on the surface of the porous surface.

## Patentansprüche

1. Verfahren zur Herstellung einer komplexen porösen Struktur nach Art einer vernetzten, verfilzten oder gewebten schaumartigen Masse, die zum Erzielen einer elektrischen Leitfähigkeit aktiviert und dazu bestimmt ist, in ihrem Innern durch elektrochemische Ablagerung über die Gesamtheit der bereitgestellten Oberfläche metallisiert zu werden, wobei die Aktivierung durch Ablagerung eines leitfähigen Polymers die folgenden Schritte aufweist:
(3) an der Oberfläche der Struktur Ablagerung von Fasern oder Maschen aus einem Monomer, bei dem eine polymerisierte Form bei Feuchtigkeit elektrisch leitfähig ist,
(4) Entwässern und/oder Schleudern nach Bedarf,
(5) Polymerisation des Monomers durch oxidative Legierung in ein elektrisch leitfähiges Polymer bei Feuchtigkeit,
(6) Wässerung und Entwässerung nach Bedarf,
(7) Trocknung nach Bedarf,
**dadurch gekennzeichnet**, dass dem Schritt (3) der Ablagerung von Monomer die folgenden Schritte vorangehen:
(1) oxidative Vorbehandlung der Grundstruktur bei Feuchtigkeit,
(2) Wässerung, nach Bedarf vollständig durch Entwässerung und Trocknung,
wobei diese Schritte im Innern der Struktur über deren gesamte Dicke an der Oberfläche jeder ihrer Fasern oder Maschen durchgeführt werden, ohne die Porosität zu beeinträchtigen, und wobei die Schritte (3) bis (7) in der jeweils gleichen Reihenfolge mehrere Male durchführbar sind.

2. Verfahren nach Anspruch 1, dadurch gekennzeichnet, dass der Schritt der oxidativen Vorbehandlung mittels einer Lösung aus Kaliumpermanganat durchgeführt wird.

3. Verfahren nach Anspruch 1, dadurch gekennzeichnet, dass der Schritt der oxidativen Vorbehandlung mittels einer Immersion in einer Lösung aus Kaliumpermanganat durchgeführt wird.

4. Verfahren nach Anspruch 1, dadurch gekennzeichnet, dass das abgelagerte Monomer Pyrrol, Furan, Thiophen oder einige ihrer Derivate und dabei insbesondere bestimmungsgemäß eingerichtete Monomere ist.

5. Verfahren nach Anspruch 4, dadurch gekennzeichnet, dass das abgelagerte Monomer Pyrrol und das entsprechende durch Oxidation von Pyrrol gebildete leitfähige Polymer Polypyrrol ist.

6. Verfahren nach Anspruch 4, dadurch gekennzeichnet, dass das zur Lösung von Pyrrol verwendete Lösungsmittel ein Alkohol, insbesondere Isopropanol, ist.

7. Verfahren nach den Ansprüchen 5 und 6, dadurch gekennzeichnet, dass die Lösung von Pyrrol, die verwendet wird, um die Ablagerung von Monomer an der bereitgestellten Oberfläche der Struktur durchzuführen, eine wässrige Lösung mit einem Gehalt von wenigstens 50 Volumen% Wasser und bei dem das Lösungsmittel für Pyrrol Isopropanol ist.

8. Verfahren nach den Ansprüchen 5 und 6, dadurch gekennzeichnet, dass die Struktur zum Abscheiden von Monomer in eine wässrige Lösung mit einem Gehalt von wenigstens 50 Volumen% Wasser getaucht wird und bei dem das Lösungsmittel für Pyrrol Isopropanol ist.

9. Aktivierte Struktur, die aus dem Verfahren gemäß einem der voranstehenden Ansprüche hervorgegangen ist, wobei die Struktur auf der Oberfläche der porösen Struktur eine homogene Ablagerung von leitfähigem Polymer aufweist.

10. Verfahren zur Herstellung einer metallisierten Struktur auf der Grundlage der Struktur gemäß Anspruch 9, dadurch gekennzeichnet, dass die elektrochemische Ablagerung der Metallisierung in einem Elektrolysebad durchgeführt wird, das stabilisierende oder oxidierende lonen der anodischen Struktur enthält.

11. Verfahren nach Anspruch 10, dadurch gekennzeichnet, dass die elektrochemische Ablagerung der Metallisierung unter dem Einfluß von gepulstem Stromfluß mit Umkehrungen der Richtung des Stroms wenigstens während der Anfangsphase der Elektrolyse durchgeführt wird, das heißt bis zur Ausbildung einer metallischen leitfähigen Ablagerung mit einer der durch das leitfähige Polymer der Struktur verliehenen entsprechenden Leitfähigkeit.

12. Verfahren nach Anspruch 10 oder 11, dadurch gekennzeichnet, dass die elektrochemische Ablagerung der Metallisierung während der Anfangsphase der Elektrolyse, das heißt bis zur Ausbildung einer metallischen leitfähigen Ablagerung mit einer der durch das leitfähige Polymer der Struktur verliehenen entsprechenden Leitfähigkeit, unter schwachem Stromeinfluß durchgeführt wird.

13. Verfahren nach einem der Ansprüche 10 bis 12, dadurch gekennzeichnet, dass die nach Aktivierung durch Ablagerung von leitfähigem Polymer durchgeführte metallische Ablagerung durch Kupfer, Nickel, Eisen, Chrom, Zink, Aluminium, eine Zinnlegierung, Blei, Gold, Platin oder ein beliebiges anderes Metall aus der Platinreihe oder durch eine Legierung, eine Mischung oder eine Überlagerung von zwei beliebigen wenigstens der oben genannten Metalle.

14. Metallisierte Struktur, die gemäß einem der Ansprüche 10 bis 13 erhalten ist, wobei die Struktur auf der Oberfläche der porösen Struktur eine homogene Ablagerung von leitfähigem Polymer aufweist.
